Europäisches Patentamt

European Patent Office

Office européen des brevets

(11) Publication number: 0 371 934 A1

## (12) EUROPEAN PATENT APPLICATION

(21) Application number: 89830526.3

(22) Date of filing: 28.11.89

(51) Int. Cl.5: H02K 1/24, H02K 13/02

(30) Priority: 30.11.88 IT 6807088

(43) Date of publication of application:
06.06.90 Bulletin 90/23

(84) Designated Contracting States:
DE ES FR GB IT SE

(71) Applicant: INDUSTRIE MAGNETI MARELLI S.r.l.
Via Adriano 81
I-20128 Milano(IT)

(72) Inventor: Povero, Felice
Via Biancamano 7
I-20052 Monza (Milano)(IT)

(74) Representative: Quinterno, Giuseppe et al
c/o Jacobacci-Casetta & Perani S.p.A. Via
Alfieri, 17
I-10121 Torino(IT)

(54) **A method of manufacturing a rotor for an alternating-current electrical machine, particularly for an alternator for motor-vehicles.**

(57) The invention relates to a method of manufacturing a rotor for an alternator for motor vehicles, of the type comprising a magnetic core (22) coaxial with and fixed to the shaft (21) of the rotor, a pair of facing pole plates (24) each having a plurality of frontal pole teeth (24a) intercalated with the teeth of the other pole plate, and an excitation winding (25) arranged around the core (22) between the two pole plates (24). The core (22) is formed integrally with the shaft from one piece of metal by cold plastic deformation. The pole plates (24) are fixed to the surface of the core (22) adjacent its two ends.

FIG. 2

EP 0 371 934 A1

# A method of manufacturing a rotor for an alternating-current electrical machine, particularly for an alternator for motor vehicles

The present invention relates to a method of manufacturing a rotor for an alternating-current electrical machine, particularly for an alternator for motor vehicles, comprising:

a shaft,

a magnetic core coaxial with and fixed to the shaft,

an excitation winding situated around the core, and

a pair of facing pole plates coaxial with the shaft and adjacent the two ends of the core, each of which has a plurality of frontal pole teeth intercalated with the pole teeth of the other.

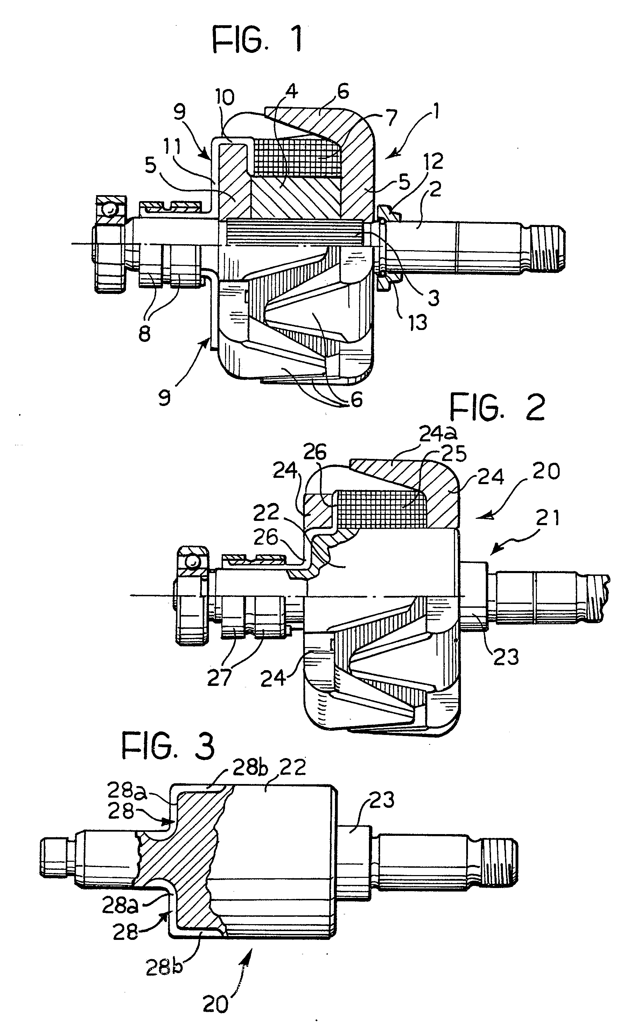

In Figure 1 of the appended drawings, a known type rotor for motor vehicle alternators is indicated 1. The rotor 1 comprises a shaft 2 having a splined central portion 3 onto which a magnetic core 4 is driven. The pole plates 5 are driven onto the same splined portion 3 of the shaft 2, adjacent the two ends of the core 4. Each pole plate 5 has a plurality of frontal pole teeth 6 intercalated with the pole teeth of the other plate. An excitation winding 7 is mounted on the magnetic core 4, coaxially with the shaft 2 and between the two pole plates 5. The input and output terminals of the excitation winding 7 are connected by two conductors 9 to two commutator rings 8 which are fixed to the shaft 2. Each conductor 9 has a section 10 which is situated in a recess between two adjacent pole teeth 6, and a radial section 11 which projects from the face of one of the two pole plates 5. A shoulder ring 12 which constitutes an axial abutment for the inner ring of a supporting rolling bearing, not shown, is also arranged on the shaft 2 and is fixed to the shaft 2 by means of a split ring 13.

Alternators which are provided with rotors of the type described above have losses which can significantly affect the current delivery at low rates of rotation, particularly because of the air gaps in the magnetic circuit, especially the air gaps constituted by the interface region between the end surfaces of the core and the pole plates. Rotors of this type can also be quite noisy because of the vibrations of the shoulder ring 12 and because of the ventilation effect achieved by the radial sections 11 of the conductors 9. Moreover, in use, the conductors 9 are subject to a centrifugal force which, together with the vibrations, sometimes causes the conductors 9 to become detached from the winding 7.

The object of the present invention is to provide a method of manufacturing a rotor of the type specified at the beginning of the present description, which enables the above problems to be avoided.

According to the present invention, this object is achieved by virtue of the fact that the core is formed integrally with the shaft from one piece of metal by means of cold plastic deformation, and that the pole plates are fixed to the surface of the core.

By virtue of these characteristics, the air gaps are reduced and the efficiency of the generator is therefore improved considerably. The method according to the invention also ensures that the rotor shaft has good mechanical strength and that the part which acts as the core has good magnetic permeability (due to the absence of work-hardening).

According to other characteristics of the invention, the shoulder ring is formed integrally with the shaft and a pair of grooves in which a corresponding end portion of the excitation winding extends is formed in a frontal end surface of the core. The noise of the alternator is thus decreased and the "centrifuging" of the terminals is avoided.

Further characteristics and advantages of the present invention will become clear from the detailed description which follows with reference to the appended drawings, provided by way of non-limiting example, in which:

Figure 1, which has already been described, is a partially-sectioned side elevational view of an alternator rotor according to the prior art,

Figure 2 corresponds to Figure 1 and is a view of a rotor according to the present invention, and

Figure 3 is a partially-sectioned side elevational view of the shaft of the rotor shown in Figure 2.

Figure 2 shows a rotor 20 for a motor vehicle alternator, according to the present invention. The rotor 20 comprises a shaft 21 which has an integral central portion 22 of larger diameter and constitutes the magnetic core of the rotor 20. A shoulder 23 is formed on the shaft 21 beside the larger-diameter portion 22 and constitutes an abutment for the inner ring of a rolling bearing, not illustrated. According to the present invention, the shaft 21, together with the shoulder 23 and the central portion 22, is formed from a single piece of mild steel, for example of CB 4 type, by rotary swaging and by finishing operations for removing chips. The swaging enables different characteristics to be obtained in the portions of the rotor which act as the shaft and the core: good mechanical strength for the portions which act as the shaft and good magnetic permeability for the portions which act as the core. An excitation winding 25 having two end portions 26 for connection to two commutator rings 27 fixed to the shaft 21 is then mounted on the core 22. Each terminal 26 of the winding 25 extends in a respective groove 28 (Figure 3) formed in the core 22. Each groove 28 has a radial section 28a on the end wall of the core 22, and an axial section 28b beneath the pole plate 24. Two pole plates 24 are mounted on the core 22 in correspondence with its ends and each has a plurality of frontal pole teeth 24a which are intercalated with the teeth of the other. The two plates 24 are fixed to the core by forcing with radial interference.

As is clear from the above description, the rotor according to the present invention enables the problems of prior-art rotors to be solved.

**Claims**

1. A method of manufacturing a rotor for an alternating-current electrical machine, particularly for an alternator for motor vehicles, comprising:
a shaft (21),
a magnetic core (22) coaxial with and fixed to the shaft (21),
an excitation winding (25) situated around the core (22), and
a pair of facing pole plates (24) coaxial with the shaft (21) and adjacent the two ends of the core (22), each of which has a plurality of frontal pole teeth (24a) intercalated with the pole teeth of the other,
the method being characterised in that the core (22) is formed integrally with the shaft (21) from one piece of metal by means of cold plastic deformation, and in that the pole plates (24) are fixed to the surface of the core (22).

2. A method according to Claim 1, characterised in that the core (22) is formed integrally with the shaft by means of swaging.

3. A method according to Claim 1, characterised in that the pole plates (24) are fixed to the core (22) by means of driving with radial interference.

4. A method according to Claim 1, for the production of a rotor also including a shoulder ring (23) coaxial with and fixed to the shaft (21) and intended to act as an abutment element for the inner ring of a rolling bearing in which one end of the shaft (21) is mounted, characterised in that the shoulder ring (23) is formed integrally with the shaft (21).

5. A method according to Claim 1, characterised in that an end surface of the core (22) is formed with a pair of grooves (28) in which respective corresponding end portions (27) of the excitation winding (25) extend.

6. A rotor for an alternating-current electrical machine, particularly for an alternator for vehicles, comprising:
a shaft (21),
a magnetic core (22) coaxial with and fixed to the shaft (21),
a pair of facing pole plates (24) coaxial with the shaft (21) and adjacent the two ends of the core (22), each of which has a plurality of frontal pole teeth intercalated with the pole teeth of the other, and
an excitation winding (25) situated around the core (22) between the pole plates (24),
characterised in that the core (22) is formed integrally with the shaft (21) by means of cold plastic deformation, and in that the pole plates (24) are fixed to the surface of the core (22).

7. A rotor according to Claim 6, characterised in that the core (22) is formed integrally with the shaft (21) by means of swaging.

8. A rotor according to Claim 6, characterised in that the pole plates (24) are fixed to the core (22) by means of driving with radial interference.

9. A rotor according to Claim 6, also including a shoulder ring (23) coaxial with and fixed to the shaft (21) and intended to act as an abutment element for the inner ring of a rolling bearing in which one end of the shaft (21) is mounted, characterised in that the shoulder ring (23) is formed integrally with the shaft (21).

10. A rotor according to Claim 1, characterised in that an end surface of the core (22) is formed with a pair of grooves (28) in which respective corresponding end portions (26) of the excitation winding (25) extend.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1590580 (CORRE)<br>* page 1, line 32 - page 3, line 26; figures 3, 5. * | 1-4, 6-9. | H02K1/24<br>H02K13/02 |
| Y | | 5, 10. | |
| Y | PATENT ABSTRACTS OF JAPAN<br>vol. 5, no. 63 (E-54)(735) 28 April 1981,<br>& JP-A-56 12847 (NIPPON DENSO) 07 February 1981,<br>* the whole document * | 5, 10. | |
| A | FR-A-1566037 (ROBERT BOSCH)<br>* page 6, line 4 - page 7, line 13; figures 1, 5. * | 1-3, 6-8. | |
| Y | PATENT ABSTRACTS OF JAPAN<br>vol. 2, no. 129 (E-78)(7786) 27 October 1978,<br>& JP-A-53 96407 (HITACHI) 23 August 1978,<br>* the whole document * | 1-4, 6-9. | |
| Y | FR-A-2346891 (LUCAS)<br>* page 3, line 34 - page 5, line 11; figure 7. * | 1-4, 6-9. | **TECHNICAL FIELDS SEARCHED (Int. Cl.5 )**<br><br>H02K |

The present search report has been drawn up for all claims

| Place of search | Date of completion of the search | Examiner |
|---|---|---|
| THE HAGUE | 09 FEBRUARY 1990 | TIO K.H. |

EPO FORM 1503 03.82 (P0401)